# EUROPEAN PATENT SPECIFICATION

(11) **EP 0 836 259 B1**
(45) Date of publication and mention of the grant of the patent: **01.02.2006**
(21) Application number: 97117343.0
(22) Date of filing: 07.10.1997
(51) Int. Cl.: H02G 3/10, H02B 1/40

(54) **Electrical installation unit**
Elektrische Installationseinheit
Unité d'installation électrique

(30) Priority: 10.10.1996 NO 964296
(43) Date of publication of application: 15.04.1998
(73) Proprietor: Elko AS, 1301 Sandvika (NO)
(72) Inventor: Huse,Per, 1344 Haslum (NO); Ellingsen,Bjoern, 3505 Krokleiva (NO); Bye,Petter A., 3029 Drammen (NO); Rundhaug,Knut T., 1349 Rykkinn (NO)
(74) Representative: Glawe, Delfs, Moll

(56) References cited:
- FR-A- 2 036 886
- GB-A- 2 151 859
- US-A- 3 477 609

## Description

Many demands are made on electrical installation material for use in buildings, either in the case of residential houses or in the case of trade buildings. In order to be useful and in particular so as to be competitive on the market place, such material must satisfy strict criteria not only with respect to electrical safety, which is supervised by governmental bodies, but also with respect to rational production, expedient mounting, including the possibility of favourable wire laying and connections internally in the installation unit concerned, and besides how much space this will occupy when mounted for example on a wall.

In view of the above factors the invention has for an object to provide an electrical installation unit involving substantial improvements with respect to most of the requirements and which on the background of previously known designs of installation units for mounting onto a wall surface, takes as a starting point such a unit which comprises a main part having a bottom and preferably four walls so as to form a receptacle for an insert member with electrical functional elements, such as a switch mechanism, terminal means or wall outlet elements, as well as comprising a mounting plate for wall fitting and a cover for closing the receptacle mentioned. US-A-3,477,609 discloses an electrical installation unit according to the preamble of claim 1.

What is novel and specific in the electrical installation unit according to the invention, consists in that at least the upper side of the insert member has a larger width or length between the opposed walls, than the corresponding width or length dimension of the bottom.

The combination of features that in accordance with claim 1 constitutes the structural solution according to the invention, leads to a number of advantages. A substantial advantage consists therein that it will be possible to design the insert member so that this will have a relatively large exposed surface or upper side, being accessible for accomodating large or small components, for example a switch mechanism, and not the least for connecting a number of wires. The favourable space relationships being obtained, also result in flexibility with respect to the accomodation of various types of insert members, for example switches, contacts or junction box parts. At the outside or the underside of the inclined walls referred to, and being delimited at another side by the upper side of the mounting plate, there is obtained a very favourable space for wire laying, that contributes to a high degree to making this installation unit very electrician-friendly. An additional advantage consists therein that the production of such a unit can be performed in a very rational manner, among other things as a result of the integral structure. Not the least it is a great advantage that the electrical safety is well attended to, in particular in view of the risk of water entering, this being not seldom a substantial problem. In the case of the common mounting on a vertical wall surface, water that may run from above, will be deviated by the inclined wall surfaces so that it is led away from the open upper side of the main part, where there might have been access to the insert member and its electrical functional elements. In this connection it is a preferred embodiment according to the invention that at least one of the two walls referred to, constitutes an essentially tight panel, i.e. without any possibility of water penetration therethrough. According to another preferred embodiment of interest in this context, there is provided a gap between the bottom and the mounting plate, such gap preferably running through in the same direction as the bottom width dimension referred to. The latter embodiment is particularly favourable when in the usual way the electrical installation unit is mounted with a horisontal orientation, i.e. with the width dimension referred to, standing vertically.

In its general form it is sufficient that only one of the walls of the main part has a pronounced inclination and is water tight as explained above. The following description relates to an embodiment having four inclined walls, this being a favourable practical design.

The installation unit according to the invention will be explained more closely with reference to the drawings, showing an example of an embodiment of the invention, whereby:
- Fig. 1: is a perspective view of the unit as seen at an angle towards the upper side thereof and without any cover applied,
- Fig. 2: is a cross section through the unit in Fig. 1, and
- Fig. 3: is an elevation and partial sectional view of the unit in Fig. 1.

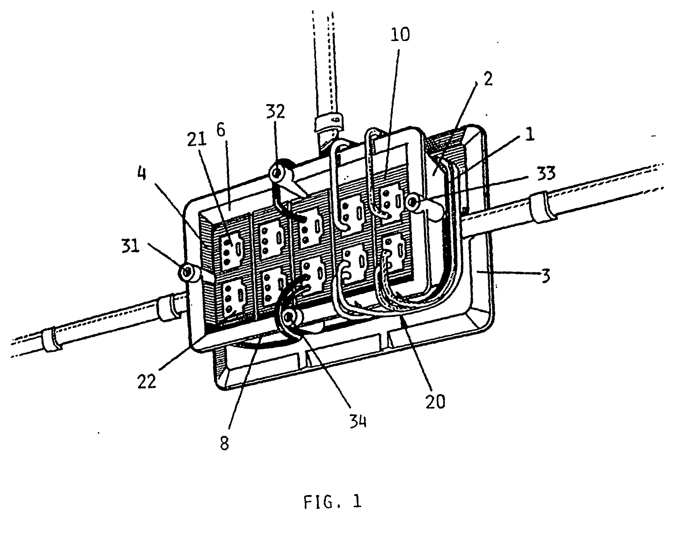

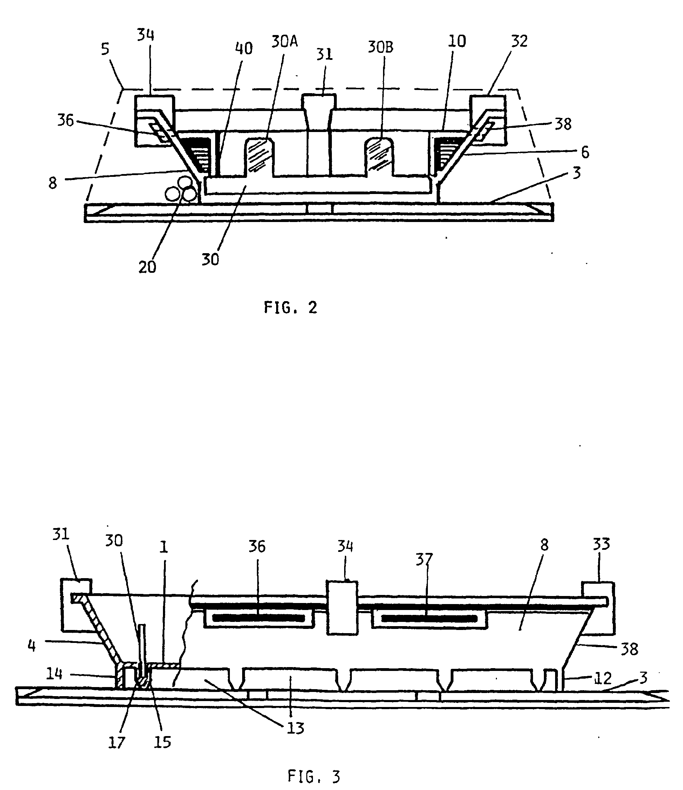

The design illustrated in the drawings comprises a mounting plate 3 for attachment to a wall, and a surrounding cover 5 is only indicated in dashed lines in Fig. 2. The cover apparently will be differently shaped depending upon the functions to be fulfilled by the unit, for example as a switch, socket outlet or junction box. A main part of the unit has a bottom 1 and four walls 2, 4, 6 and 8, so that there is obtained an internal receptacle intended for accommodating an insert member generally denoted 10 in Figs. 1 and 2. In this example particularly Fig. 1 shows that the insert member 10 comprises a number of electrical functional elements, of which two elements 21 and 22 have been indicated in Fig. 1. These parts of the unit will be explained more closely below.

As illustrated in the drawings all the walls 2, 4, 6, 8 have a pronounced inclination in the direction upwards and outwards in relation to the bottom 1 and the inner receptacle of the main part. This inclination of the walls is at one hand related to the dimensions of the upper side of insert member 10, as will be seen in particular from Fig. 2. Thus, the upper side of the insert has a larger width between the two opposed inclined walls 6 and 8 than the corresponding width dimension at the bottom 1, where the lower edges of walls 6 and 8 are located at a relatively small spacing from mounting plate 3. A corresponding relationship can also apply to the dimensions in the longitudinal direction, but this can not be seen from Fig. 3 since the insert member 10 has not been shown therein.

The spacing just mentioned can also be seen from Fig. 3, where there is shown one or more gaps 13 being formed through the whole width of the main part, so that there is obtained an advantageous passage for diverting water that may come in from above in the case of the horisontal mounting of the installation unit at a vertical wall surface as mentioned above. Also in the case of an upright orientation of the unit at a wall surface, possible water penetrating into the unit will be diverted in a favourable direction by means of the inclined wall 2 or the inclined wall 4, depending on which of these is facing upwards. In view of the effect explained here, it is appropriate that two or more of the inclined walls 2, 4, 6, 8 are generally unbroken or tight panels, in particular the wall portions extending upwards-outwards from the bottom 1. Also the bottom 1 is made watertight.

The insert member 10, being best illustrated in Fig. 1, is designed for the case that the unit shall have a junction box function. In this case the insert 10 has a frame-like shape with a number of recesses 40 (Fig. 2) for receiving functional elements, being in the following description also denoted connection modules, of which two are indicated at 21 and 22 (Fig. 1). These are plug-in modules and preferably provided with screwless terminals which can be of a design known per se. This arrangement of the frame or insert member 10 involves great flexibility as regards the utilisation of such a juction box. At the installation site the electrican can have at his disposal a supply of such plug-in connection modules; these can be plugged into the junction box concerned at a desired number and configuration in the recesses comprised by insert member 10. Corresponding possibilities can of course be present in the case of an insert member intended for a switch mechanism or socket outlet. Also in such embodiments there can be arranged a relatively ample number of recesses for connection modules in the insert member.

When there is question of a junction box as in Fig. 1, with a double row of open recesses for the plug-in connection modules mentioned, there may be an advantage according to Fig. 2 to provide a transverse, plate-shaped contact element 30 for electrical inter-connection between connection modules, for example 21 and 22 in Fig. 1, and inserted in pairs of interrelated recesses. Fig. 2 shows that contact element 30 has two upwardly projecting tongues 30A and 30B adapted to establish electric contact with connection modules being plugged in.

More in detail Fig. 3 in the partial section at the left-hand portion of the figure, shows a contact element 30 received in a slit 17 in a transverse web or profile 15 depending from the bottom 1. At this point it is an advantage for pure strength reasons, inter alia, that the web 15 is extended fully down to be connected or joined to the mounting plate 3. It appears from Fig. 3 that there are provided a number of such transverse webs forming therebetween the through gaps 13 referred to above. It is evident that the design does not depend on these webs 15 for its mechanical strength, since supporting walls as shown at 12 and 14 extend from bottom 1 down for joining the mounting plate 3 at both ends of the main part. Apparently also additional supports of this kind can be provided if necessary.

At 20 in Fig. 2 there is illustrated how wires or cables can be arranged in a very favourable manner within the mentioned space being present between the outside of the inclined walls, for example wall 8, and mounting plate 3. Such wire arrangement is also shown at 20 in Fig. 1.

For anchoring of the insert member 10 by snap action in the receptacle inside inclined walls 2, 4, 6, 8, the longitudinal walls 6 and 8 have been provided with slits as shown at 36, 37 and 38, for cooperation with laterally projecting profile portions on insert member 10. Also for the purpose of a favourable snap action by this method of attachment of insert 10, the inclination of walls 6 and 8 is advantageous. Even though these slits 36, 37 and 38 can go through the wall portion concerned, the position of these high up from bottom 1 will not have any detrimental influence on the water deviating function of the inclined walls as explained above.

Finally it is to be noted that all figures of drawings show reinforcements or bosses 31, 32, 33 and 34 with screw holes for the attachment of a cover; this being only indicated with dashed lines in Fig. 2.

## Claims

1. Electrical installation unit for mounting onto a wall surface and comprising a main part with a bottom (1) and preferably four walls (2,4,6,8) for forming a receptacle to accommodate an insert member (10) with electrical functional elements (21,22), such as a switch mechanism, connection means or socket outlet elements, as well as comprising a mounting plate (3) for wall attachment and a cover (5) for closing said receptacle,
whereby at least one of two opposed walls (6,8) of the main part has a pronounced inclination upwards-outwards from the bottom (1), and **characterized in**
**that** at least the upper side of the insert member (10) has a larger width or length between the two opposed walls (6,8), than the corresponding width or length dimension respectively, of the bottom (1).

2. Electrical installation unit according to claim 1,
**characterized in that** at least two of the walls (2,4,6,8) constitute essentially tight surfaces.

3. Electrical installation unit according to claim 1 or 2,
**characterized in that** the insert member comprises a frame (10) having open recesses (40) adapted to receive plug-in connection modules (21,22), preferably being provided with screwless terminals.

4. Electrical installation unit according to claim 3 in the form of a junction box,
**characterized in that** the frame (10) is provided with a double row of open recesses (40) and that for pairs of recesses belonging together there is provided a transverse, plate-shaped contact element (30) for electrical connection (30A, 30B) to connection modules (21,22) inserted in the recesses concerned.

5. Electrical installation unit according to any one of claims 1-4,
**characterized in that** a gap (13) is present between the bottom (1) and the mounting plate (3), the gap being preferably through-running in the same direction as said width dimension of the bottom (1).

6. Electrical installation unit according to claim 4 and 5,
**characterized in that** the contact elements (30) are received in slits (17) in the bottom (1), transverse webs (15) for the slits (17) underneath the bottom (1), being preferably projecting down to a connection with the mounting plate (3).

## Revendications

1. Unité d'installation électrique à monter sur un parement de mur et comprenant une partie principale avec un fond (1) et de préférence quatre parois (2, 4, 6, 8) pour former un réceptacle pour accueillir un élément formant membre d'insertion (10) avec des éléments fonctionnels électriques (21, 22), tels qu'un mécanisme de commutation, un moyen de connexion ou des éléments de sortie de prise, et comprenant également une plaque de montage (3) pour la fixation au mur et un couvercle (5) pour fermer ledit réceptacle,
dans laquelle au moins une des deux parois opposées (6, 8) de la partie principale présente une inclinaison prononcée vers le haut et vers l'extérieur, en partant du fond (1), et **caractérisée en ce que**
au moins la face supérieure de l'élément formant membre d'insertion (10) a une largeur, ou une longueur, plus importante entre les deux parois opposées (6, 8) que la dimension respective correspondante de la largeur, ou de la longueur, du fond (1).

2. Unité d'installation électrique selon la revendication 1,
**caractérisée en ce que** au moins deux des parois (2, 4, 6, 8) constituent essentiellement des surfaces hermétiques.

3. Unité d'installation électrique selon les revendications 1 ou 2,
**caractérisée en ce que** l'élément formant membre d'insertion comprend une armature (10) présentant des évidements ouverts (40) adaptés pour recevoir des modules de connexion enfichables (21, 22), étant de préférence munis de bornes sans vis.

4. Unité d'installation électrique selon la revendication 3, se présentant sous la forme d'une boîte de jonction,
**caractérisée en ce que** l'armature (10) est munie d'une double rangée d'évidements ouverts (40) et **en ce que** pour les paires d'évidements cohabitant ensemble est proposé un élément de contact de forme plane, transversal (30) pour la connexion électrique (30A, 30B) aux modules de connexion (21, 22) insérés dans les évidements concernés.

5. Unité d'installation électrique selon l'une quelconque des revendications 1 à 4,
**caractérisée en ce qu'**il y a un espace (13) entre le fond (1) et la plaque de montage (3), l'espace étant de préférence transversal débouchant dans la même direction que ladite dimension de largeur du fond (1).

6. Unité d'installation électrique selon les revendications 4 et 5,
**caractérisée en ce que** les éléments de contact (30) sont reçus dans des fentes (17) pratiquées dans le fond (1), les bandes transverses (15) des fentes (17) au-dessous du fond (1), faisant de préférence saillie en une connexion avec la plaque de montage (3).

## Patentansprüche

1. Elektrische Installationseinheit zum Anbringen an einer Wandoberfläche und die einen Hauptteil mit einem Boden (1) und vorzugsweise vier Wänden (2, 4, 6, 8) zum Bilden einer Steckdose oder Steckbuchse zum Aufnehmen eines Einsatzgliedes (10) mit elektrisch funktionellen Elementen (21, 22), wie z. B. einem Schaltermechanismus, Verbindungsmitteln oder Steckdosenauslasselementen, und die auch eine Montageplatte (3) für die Anbringung an der Wand und eine Abdeckung (5) zum Schließen der Steckbuchse aufweist, wobei wenigstens eine der beiden gegenüberstehenden Wände (6, 8) des Hauptteils eine ausgeprägte Neigung nach oben und nach außen von dem Boden (1) hat, und **dadurch gekennzeichnet, dass** wenigstens die obere Seite des Einsatzgliedes (10) eine größere Breite oder Länge zwischen den beiden gegenüberstehenden Wänden (6, 8) als die entsprechende Breiten- bzw. Längenabmessung des Bodens (1) hat.

2. Elektrische Installationseinheit nach Anspruch 1, **dadurch gekennzeichnet, dass** wenigstens zwei der Wände (2, 4, 6, 8) im wesentlichen festsitzende Oberflächen bilden.

3. Elektrische Installationseinheit nach Anspruch 1 oder 2, **dadurch gekennzeichnet, dass** das Einsatzglied einen Rahmen (10) mit offenen Ausnehmungen (40) aufweist, die dazu ausgebildet sind, Einsteckverbindungsmodule (21, 22) aufzunehmen, die vorzugsweise mit schraubenlosen Anschlüssen versehen sind.

4. Elektrische Installationseinheit nach Anspruch 3 in Form eines Verbindungskastens, **dadurch gekennzeichnet, dass** der Rahmen (10) mit einer doppelten Reihe von offenen Ausnehmungen (40) versehen ist und dass für Paare von Ausnehmungen, die zusammengehören, ein querverlaufendes plattenförmiges Kontaktelement (30) für elektrische Verbindung (30A, 30B) zu Verbindungsmodulen (21, 22) vorgesehen ist, die in die betreffenden Ausnehmungen eingefügt sind.

5. Elektrische Installationseinheit nach einem der Ansprüche 1 bis 4, **dadurch gekennzeichnet, dass** ein Zwischenraum (13) zwischen dem Boden (1) und der Montageplatte (3) vorhanden ist, wobei der Zwischenraum vorzugsweise in derselben Richtung wie die Breitendimension des Bodens (1) durchläuft.

6. Elektrische Installationseinheit nach Anspruch 4 und 5, **dadurch gekennzeichnet, dass** die Kontaktelemente (30) in Schlitzen (17) im Boden (1) aufgenommen sind, wobei querverlaufende Stege (15) der Schlitze (17) unterhalb des Bodens (1) vorzugsweise nach unten für eine Verbindung mit der Montageplatte (3) vorstehen.
